# EUROPEAN PATENT APPLICATION

(11) **EP 4 783 571 A1**
(43) Date of publication of application: **29.07.2026**
(21) Application number: 26153715.3
(22) Date of filing: 23.01.2026
(51) Int. Cl.: H04N 9/31

(54) **DATA TRANSMISSION METHOD, TRANSMISSION SYSTEM, AND PROGRAM**

(30) Priority: 23.01.2025 JP 2025009682
(71) Applicant: Seiko Epson Corporation, Tokyo 160-8801 (JP)
(72) Inventor: TAWAKI, Hajime, Suwa-shi, 392-8502 (JP); SAKAMOTO, Eisuke, Suwa-shi, 392-8502 (JP); YAMADA, Kento, Suwa-shi, 392-8502 (JP); YOSHIDA, Masataka, Suwa-shi, 392-8502 (JP)
(74) Representative: Lewis Silkin LLP

(57) **Abstract**

According to an aspect of the present disclosure, there is provided a data transmission method including displaying, with a display device different from a projection device and connected to a first information processing device, at least four adjustment points for adjusting a display range or a display shape of an image projected from the projection device onto a target, executing, with the first information processing device, processing of dividing a polygon in which the at least four adjustment points are connected to one another into at least two triangles, and transmitting, with the first information processing device, coordinate data indicating coordinates of vertices of each of the at least two triangles to a second information processing device different from the first information processing device and configured to control the projection device.

## Description

The present application is based on, and claims priority from JP Application Serial Number 2025-009682, filed January 23, 2025, the disclosure of which is hereby incorporated by reference herein in its entirety.

### BACKGROUND

### 1. Technical Field

The present disclosure relates to a data transmission method, a transmission system, and a non-transitory computer-readable storage medium storing a transmission program.

### 2. Related Art

A display range and a display shape of an image projected from a projection device onto a target are sometimes optionally adjusted. For example, JP-A-2022-77773 discloses a system in which a personal computer generates a mask image having a shape specified by a mask parameter.

JP-A-2022-77773 is an example of the related art.

In the technique described in JP-A-2022-77773, when data indicating a mask image is transmitted to another information processing device, transmission speed decreases depending on a communication band or the like.

### SUMMARY

According to an aspect of the present disclosure, there is provided a data transmission method including: displaying, with a display device different from a projection device and connected to a first information processing device, at least four adjustment points for adjusting a display range or a display shape of an image projected from the projection device onto a target; executing, with the first information processing device, processing of dividing a polygon in which the at least four adjustment points are connected to one another into at least two triangles; and transmitting, with the first information processing device, coordinate data indicating coordinates of vertices of each of the at least two triangles to a second information processing device different from the first information processing device and configured to control the projection device.

According to an aspect of the present disclosure, there is provided a transmission system including: a projection device configured to project an image onto a target; a display device configured to display at least four adjustment points for adjusting a display range or a display shape of the image; and one or more of first processors configured to control the display device, wherein the one or the plurality of first processors execute; executing processing of dividing a polygon in which the at least four adjustment points are connected to one another into at least two triangles; and transmitting coordinate data indicating coordinates of vertices of each of the at least two triangles to one or more of second processors different from the one or more first processors and configured to control the projection device.

According to an aspect of the present disclosure, there is provided a program for causing a computer, which controls a display device that displays at least four adjustment points for adjusting a display range or a display shape of an image projected from a projection device to a target, to execute: dividing a polygon in which the at least four adjustment points are connected to one another into at least two triangles; and transmitting coordinate data indicating coordinates of vertices of each of the at least two triangles to another computer that controls the projection device.

### BRIEF DESCRIPTION OF THE DRAWINGS

FIG. 1 is a diagram illustrating an overview of a transmission system according to an embodiment.
FIG. 2 is a block diagram of a first projector and a terminal device.
FIG. 3 is a flowchart of a data transmission method according to the embodiment.
FIG. 4 is a diagram illustrating a display example of adjustment points.
FIG. 5 is a diagram illustrating movement of the adjustment points.
FIG. 6 is a diagram illustrating addition and movement of the adjustment points.
FIG. 7 is a diagram illustrating division of a polygon.
FIG. 8 is a diagram illustrating division of the polygon.
FIG. 9 is a diagram illustrating projection of a masked image before adjustment.
FIG. 10 is a diagram illustrating projection of the masked image during adjustment.
FIG. 11 is a diagram illustrating projection of the masked image after adjustment.
FIG. 12 is a diagram illustrating a first example of deformation of a polygon.
FIG. 13 is a diagram illustrating update of a masked image in the first example illustrated in FIG. 12.
FIG. 14 is a diagram illustrating a second example of deformation of a polygon.
FIG. 15 is a diagram illustrating update of a masked image in the second example illustrated in FIG. 14.
FIG. 16 is a diagram illustrating a third example of deformation of a polygon.
FIG. 17 is a diagram illustrating update of a masked image in the third example illustrated in FIG. 16.

### DESCRIPTION OF EMBODIMENTS

A preferred embodiment according to the present disclosure is explained below with reference to the accompanying drawings. Note that, in the drawings, dimensions and scales of units are different from actual ones as appropriate, and some portions are schematically illustrated in order to facilitate understanding. The scope of the present disclosure is not limited to the embodiment unless, in the following explanation, there is description to the effect that the present disclosure is limited.

### 1. Embodiment

### 1-1. Overview of a transmission system

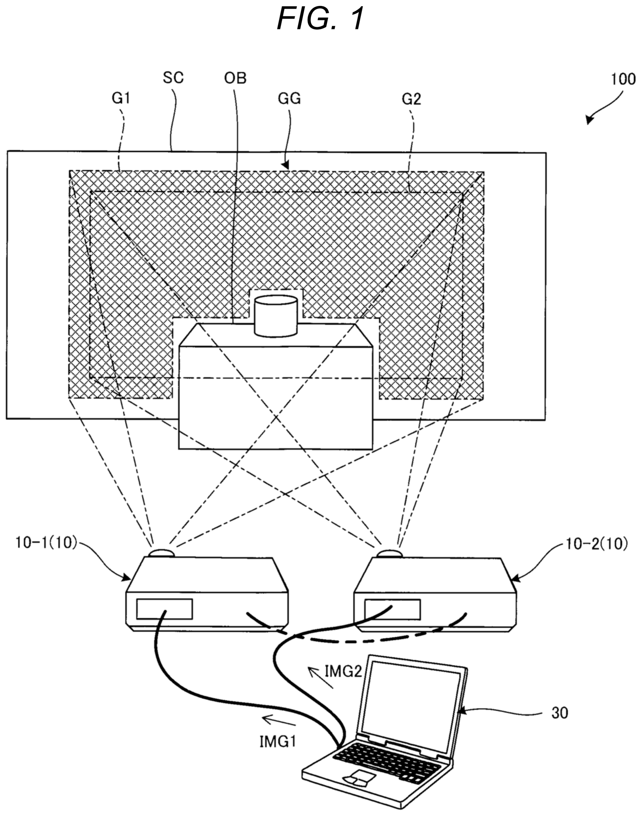

FIG. 1 is a diagram illustrating an overview of a transmission system 100 according to an embodiment. The transmission system 100 is a multi-projection system that projects an entire image GG onto a projection surface SC. The projection surface SC is an example of a "target". In FIG. 1, an aspect in which the entire image GG is displayed by stack projection for superimposing a plurality of projection images on the projection surface SC is exemplified.

As illustrated in FIG. 1, the transmission system 100 includes a first projector 10-1, a second projector 10-2, and a terminal device 30. The first projector 10-1 is an example of a "projection device". In the following explanation, the first projector 10-1 and the second projector 10-2 are sometimes referred to as projectors 10 without being distinguished from each other.

The transmission system 100 projects the entire image GG onto the projection surface SC using a plurality of projectors 10. In an example illustrated in FIG. 1, the transmission system 100 projects the entire image GG onto the projection surface SC using two projectors 10. The projection surface SC is a projection target and is specifically a surface of an object such as a screen. In the example illustrated in FIG. 1, the projection surface SC is a planar surface. An obstacle OB is disposed in the front of the projection surface SC, that is, between the projection surface SC and the projectors 10. The obstacle OB overlaps a part of the projection surface SC when the projection surface SC is viewed from the projectors 10.

The projection surface SC is not limited to the planar surface and may, for example, be a curved surface. In the present embodiment, an aspect in which the number of projectors 10 provided in the transmission system 100 is two is exemplified. However, without being limited to this aspect, the number may be three or more. That is, the entire image GG may include images projected from three or more projectors 10. The shape, the disposition, and the like of the obstacle OB are not limited to the illustrated example and are optional. The obstacle OB may be intentional or accidental and may not be present.

The first projector 10-1 is a display device that projects a first image G1, which is an image indicated by image data IMG1 output from the terminal device 30, onto the projection surface SC. The second projector 10-2 is a display device that projects a second image G2, which is an image indicated by image data IMG2 output from the terminal device 30, onto the projection surface SC.

The first image G1 is projected onto the projection surface SC from the first projector 10-1 and the second image G2 is projected onto the projection surface SC from the second projector 10-2 as explained above, whereby the entire image GG including the first image G1 and the second image G2 is projected onto the projection surface SC. In the example illustrated in FIG. 1, the first image G1 includes the second image G2 on the projection surface SC. Here, the first image G1 and the second image G2 have the same display content. Accordingly, the bright and clear entire image GG can be displayed.

The first image G1 and the second image G2 are projected onto the projection surface SC in a display range or a display shape avoiding the obstacle OB. Accordingly, for example, when measurement is performed using a result obtained by imaging a measurement pattern projected as the first image G1 or the second image G2 with an imaging device 17 explained below, it is possible to improve accuracy of the measurement.

In the present embodiment, the first projector 10-1 is a main machine and controls an operation of the second projector 10-2, which is a sub-machine. The second projector 10-2 is configured the same as the first projector 10-1 except that the operation of the second projector 10-2 is controlled by the first projector 10-1. Note that the second projector 10-2 only has to have a configuration in which the operation of the second projector 10-2 can be controlled by the first projector 10-1 and may have a configuration different from the configuration of the first projector 10-1. When the number of projectors 10 provided in the transmission system 100 is three or more, among the three or more projectors 10, one projector 10 is a main machine and each of the other two or more projectors 10 is a sub-machine.

The terminal device 30 is a device having a function of performing processing of dividing image data indicating one image into a plurality of pieces of image data to be projected by the plurality of projectors 10 and a function of supplying the divided pieces of image data to the projectors 10 corresponding to the image data. Besides these functions, the terminal device 30 has a function of generating information concerning a display range or a display shape of the first image G1 or the second image G2 and a function of transmitting the generated information to the projectors 10.

The terminal device 30 in the present embodiment divides image data indicating one image into image data IMG1 and image data IMG2 and thereafter supplies the image data IMG1 to the first projector 10-1 and supplies the image data IMG2 to the second projector 10-2. The terminal device 30 may supply the image data IMG1 and the image data IMG2 to the first projector 10-1. In this case, the first projector 10-1 supplies the image data IMG2 to the second projector 10-2. The terminal device 30 may supply image data to the first projector 10-1 and the first projector 10-1 may perform the division processing for the image data.

In the example illustrated in FIG. 1, the terminal device 30 is a laptop computer. The terminal device 30 is not limited to the laptop computer and may be, for example, a desktop computer, a smartphone, or a tablet terminal.

### 1-2. Projection device and first information processing device

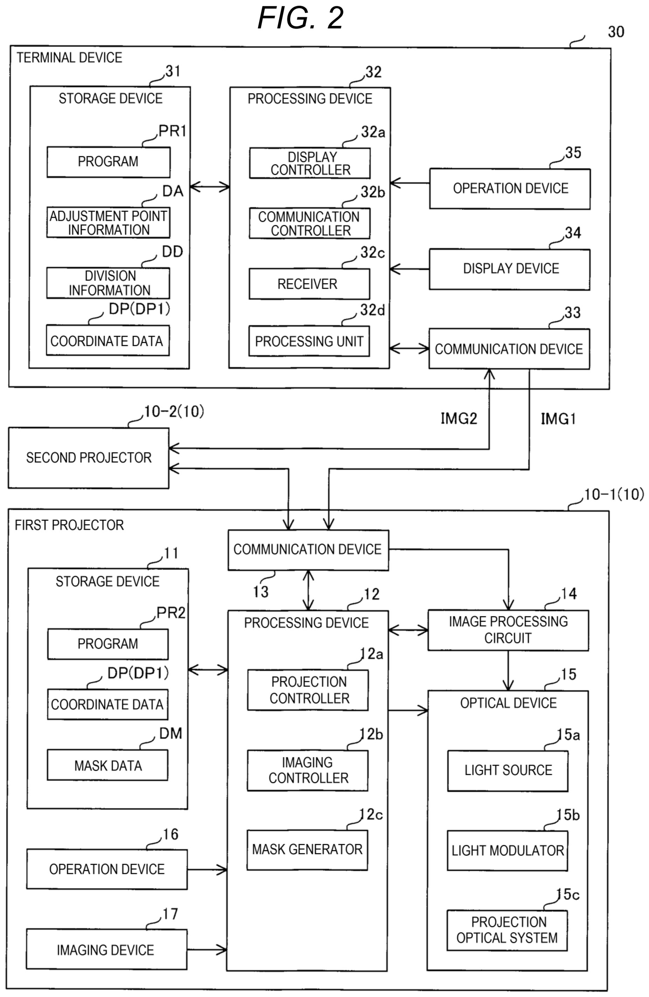

FIG. 2 is a block diagram of the first projector 10-1 and the terminal device 30. In FIG. 2, besides the first projector 10-1 and the terminal device 30, a connection state of the second projector 10-2 to the first projector 10-1 and the terminal device 30 is illustrated. Although not illustrated, a configuration of the second projector 10-2 is the same as the configuration of the first projector 10-1. Therefore, in the following explanation of elements of the second projector 10-2, the first projector 10-1 only has to be replaced with the second projector 10-2 and the image data IMG1 only has to be replaced with the image data IMG2. In the following explanation, concerning the elements of the projectors 10, the elements of the first projector 10-1 and the elements of the second projector 10-2 are sometimes distinguished by adding a suffix "-1" to reference signs of the elements of the first projector 10-1 and adding a suffix "-2" to reference signs of the elements of the second projector 10-2.

As illustrated in FIG. 2, the first projector 10-1 includes a storage device 11, a processing device 12, a communication device 13, an image processing circuit 14, an optical device 15, an operation device 16, and an imaging device 17. These devices are communicably connected to one another. The processing device 12 is an example of a "second information processing device", "one or more of second processors", or "another computer" and is different from the processing device 32 and controls an operation of the first projector 10-1.

The storage device 11 is a storage device that stores programs to be executed by the processing device 12 and data to be processed by the processing device 12. The storage device 11 includes, for example, a hard disk drive or a semiconductor memory. A part or the entire storage device 11 may be provided in a storage device on the outside of the first projector 10-1, a server, or the like.

A program PR2, coordinate data DP, and mask data DM are stored in the storage device 11.

The program PR2 is a program for executing a data transmission method explained in detail below in conjunction with a program PR1 explained below. The coordinate data DP is information indicating coordinates of vertices PV explained below and includes first coordinate data DP1. The first coordinate data DP1 is information indicating coordinates of the vertices PV of a first triangle TR-1 having, as a vertex, a first adjustment point PT-S explained below. The mask data DM is information for adjusting a display range and indicates a masked image GM explained below.

The processing device 12 is a processing device having a function of controlling the units of the first projector 10-1 and a function of processing various data. The processing device 12 includes at least one processor such as a central processing unit (CPU). The processing device 12 may include a single processor or may include a plurality of processors. Some or all of the functions of the processing device 12 may be implemented by hardware such as a digital signal processor (DSP), an application specific integrated circuit (ASIC), a programmable logic device (PLD), or a field programmable gate array (FPGA). The processing device 12 may be integrated with the image processing circuit 14.

The communication device 13 is a communication device capable of communicating with various types of equipment and acquires the image data IMG1 from the terminal device 30 and communicates with the second projector 10-2. For example, the communication device 13 is a wired communication device of a wired local area network (LAN), a universal serial bus (USB), a high definition multimedia interface (HDMI), or the like or a wireless communication device of a low power wide area (LPWA), a wireless LAN including Wi-Fi, Bluetooth, or the like. Each of "HDMI", "Wi-Fi", and "Bluetooth" is a registered trademark.

The image processing circuit 14 is a circuit that performs necessary processing on the image data IMG1 received from the communication device 13 and inputs the image data IMG1 to the optical device 15. The image processing circuit 14 includes, for example, a not-illustrated frame memory, loads the image data IMG1 in the frame memory, executes various kinds of processing such as resolution conversion processing, resize processing, and distortion correction processing on the image data IMG1 as appropriate, and inputs the image data IMG1 to the optical device 15. The image processing circuit 14 may execute, according to necessity, processing such as OSD (On Screen Display) processing of generating image information for menu display, operation guide, or the like and combining the image information with the image data IMG1.

The optical device 15 is a device that projects image light onto the projection surface SC. The optical device 15 includes a light source 15a, a light modulator 15b, and a projection optical system 15c.

The light source 15a includes a light source such as a halogen lamp, a xenon lamp, an ultrahigh-pressure mercury lamp, a light emitting diode (LED), or a laser light source and emits red light, green light, and blue light. The light modulator 15b draws an image based on the image data IMG1 supplied from the terminal device 30. The light modulator 15b includes three light modulation elements provided to correspond to red, green, and blue. The light modulation elements include, for example, transmissive liquid crystal panels, reflective liquid crystal panels, or digital mirror devices (DMDs) and modulate lights of colors corresponding thereto to thereby generate image lights of the colors. The image lights of the colors generated by the light modulator 15b are combined by a light combination optical system to be full-color image light. The projection optical system 15c is an optical system including a projection lens or the like that forms an image of the full-color image light emitted from the light modulator 15b and projects the image onto the projection surface SC. The image drawn by the light modulator 15b, that is, a drawn image is projected onto the projection surface SC via the projection lens.

The optical device 15 includes a mechanism that changes a relative positional relationship between the light modulator 15b and the projection optical system 15c. An optical lens shift function is implemented by changing the positional relationship. That is, the optical device 15 changes the relative positional relationship between the light modulator 15b and the projection optical system 15c to thereby change the position of the first image G1 on the projection surface SC while keeping the position and the posture of the first projector 10-1 with respect to the projection surface SC fixed. Typically, the lens shift function is implemented by a mechanism including a stepping motor that moves the position of the projection lens that emits image light onto the projection surface SC.

In the optical device 15, a drawing position in the light modulator 15b can be changed. An electronic shift function may be implemented by changing the drawing position. That is, the optical device 15 may change the drawing position in the light modulator 15b to thereby change the position of the first image G1 on the projection surface SC while keeping the position and the posture of the first projector 10-1 with respect to the projection surface SC fixed.

The operation device 16 is a device that receives operation of a user. For example, the operation device 16 includes an operation panel and a remote controller light receiver, both of which are not illustrated in the figures. The operation panel is provided in an exterior housing of the first projector 10-1 and outputs a signal based on operation of the user. The remote controller light receiver receives an infrared signal output from a not-illustrated remote controller, decodes the infrared signal, and outputs a signal based on operation on the remote controller. Note that the operation device 16 is provided according to necessity and a part of the operation device 16 may be omitted.

The imaging device 17 is a digital camera including an imaging element such as a charge coupled device (CCD) or a complementary metal oxide semiconductor (CMOS). The imaging element includes a plurality of pixels. The imaging device 17 may be a device independent of the first projector 10-1.

In the first projector 10-1 explained above, the processing device 12 executes the program PR2 stored in the storage device 11 to thereby function as a projection controller 12a, an imaging controller 12b, and a mask generator 12c. Therefore, the processing device 12 includes the projection controller 12a, the imaging controller 12b, and the mask generator 12c.

The projection controller 12a controls operations of the image processing circuit 14 and the optical device 15 of each of the first projector 10-1 and the second projector 10-2. More specifically, the projection controller 12a projects the first image G1 onto the projection surface SC and projects the second image G2 onto the projection surface SC to thereby project the entire image GG onto the projection surface SC.

The imaging controller 12b controls an operation of the imaging device 17 of one or both of the first projector 10-1 and the second projector 10-2. More specifically, the imaging controller 12b causes the imaging device 17 to capture the first image G1 projected onto each of a plurality of positions of the projection surface SC or causes the imaging device 17 to capture the second image G2 projected onto each of the plurality of positions on the projection surface SC.

The mask generator 12c generates mask data DM based on the coordinate data DP.

As illustrated in FIG. 2, the terminal device 30 includes a storage device 31, a processing device 32, a communication device 33, a display device 34, and an operation device 35. These devices are communicably connected to one another. Here, the display device 34 is different from the first projector 10-1 and is connected to the processing device 32. The processing device 32 is an example of a "first information processing device", "one or more of first processors", or a "computer". The display device 34 may be an external element of the terminal device 30. In this case, the terminal device 30 may be grasped as an example of the "first information processing device", the "one or the plurality of first processors", or the "computer".

The storage device 31 is a storage device that stores programs such as an operating system and application programs to be executed by the processing device 32 and data to be processed by the processing device 32. The storage device 31 includes, for example, a hard disk drive or a semiconductor memory. A part or the entire storage device 31 may be an external storage device of the terminal device 30 or may be provided in an external device such as a server connected to the terminal device 30 via a communication network such as the Internet.

In the storage device 31, a program PR1, adjustment point information DA, division information DD, and coordinate data DP are stored.

The program PR1 is a program for executing a data transmission method explained in detail below in conjunction with the program PR2 explained above. That is, the program PR1 and the program PR2 are examples of a "transmission program".

The adjustment point information DA is information indicating a plurality of adjustment points PT explained below. The division information DD is information indicating at least two triangles TR explained below.

The processing device 32 is a processing device having a function of controlling the units of the terminal device 30 and a function of processing various data. The processing device 32 includes a processor such as a CPU. The processing device 32 may include a single processor or may include a plurality of processors. Some or all of the functions of the processing device 32 may be implemented by hardware such as a DSP, an ASIC, a PLD, or an FPGA.

The communication device 33 is a communication device capable of communicating with the projector 10 and the like. For example, the communication device 33 is a wired communication device of, for example, a wired LAN, a USB, or an HDMI or a wireless communication device of, for example, an LPWA, a wireless LAN including Wi-Fi, or Bluetooth. Each of "HDMI", "Wi-Fi", and "Bluetooth" is a registered trademark. The communication device 33 may be capable of communicating with equipment other than the projector 10.

The display device 34 displays various images under the control by the processing device 32. The display device 34 is a display device including various display panels such as a liquid crystal display panel and an organic EL display panel.

The operation device 35 is input equipment that receives operation of the user. For example, the operation device 35 includes a pointing device such as a touch pad, a touch panel, or a mouse. Here, when the operation device 35 includes the touch panel, the operation device 35 may also serve as the display device 34.

In the terminal device 30 explained above, the processing device 32 executes the program PR1 stored in the storage device 31 to thereby function as a display controller 32a, a communication controller 32b, a receiver 32c, and a processing unit 32d. Therefore, the processing device 32 includes the display controller 32a, the communication controller 32b, the receiver 32c, and the processing unit 32d.

The display controller 32a controls an operation of the display device 34 to thereby cause the display device 34 to display various information. Specifically, the display controller 32a causes the display device 34 to display an image GU necessary for executing a data transmission method explained below.

The communication controller 32b controls an operation of the communication device 33 to thereby transmit and receive various information. Specifically, the communication controller 32b causes the communication device 33 to transmit the coordinate data DP to the first projector 10-1. The communication controller 32b also receives, from the projector 10, information indicating a maximum number of vertical pixels and a maximum number of horizontal pixels of a light modulation element, that is, information defining a coordinate system of the light modulation element.

The receiver 32c receives various kinds of operation from the user based on an input result to the operation device 35. Specifically, the receiver 32c receives addition of adjustment points and operation on the adjustment points explained below via the operation device 35. Based on the information defining the coordinate system of the light modulation element, the receiver 32c treats the addition of the adjustment points and the operation on the adjustment points explained below in a coordinate system of the light modulator 15b (the light modulation element) rather than a coordinate system of the display device 34. Accordingly, the receiver 32c can treat, for example, an operation amount for adjustment points explained below displayed on the display device 34 as a shift amount of pixels of the adjustment points in the coordinate system of the light modulator 15b (the light modulation element).

The processing unit 32d generates the adjustment point information DA based on a reception result of the receiver 32c. The processing unit 32d generates the division information DD based on the adjustment point information DA. Further, the processing unit 32d generates the coordinate data DP based on the division information DD. These pieces of generated information are stored in the storage device 31.

### 1-3. Data transmission method

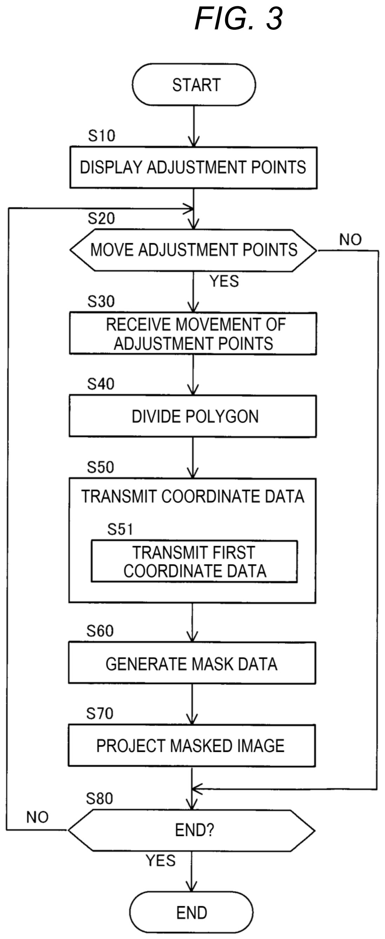

FIG. 3 is a flowchart of a data transmission method according to the embodiment. The data transmission method includes steps S10 to S80. The program PR1 causes the processing device 32 to execute steps S10 to S50. The program PR2 causes the processing device 12 to execute steps S60 to S80. Hereinafter, overviews of the steps are explained in order.

In step S10, the processing device 32 functioning as the display controller 32a causes the display device 34 to display at least four adjustment points PT explained below. Accordingly, in step S10, the at least four adjustment points PT explained below are displayed on the display device 34. Information indicating the at least four adjustment points PT is stored in the storage device 31 as the adjustment point information DA.

After step S10, in step S20, the processing device 32 determines whether any one of the at least four adjustment points PT explained below has been operated. Step S20 is repeatedly executed until operation on the adjustment point PT explained below is performed. In the drawing, when operation on the adjustment point PT explained below is not performed (step S20: NO), the processing device 32 shifts to step S80. When operation on the adjustment point PT explained below is not performed (step S20: NO), the processing device 32 may repeat step S20 not through step S80.

When operation on the adjustment point PT explained below is performed (step S20: YES), in step S30, the processing device 32 functioning as the receiver 32c receives operation on the first adjustment point PT-S explained below, which is any one of the at least four adjustment points PT explained below. Accordingly, the processing device 32 receives operation on the first adjustment point PT-S.

After step S30, in step S40, the processing device 32 functioning as the processing unit 32d generates the division information DD based on the adjustment point information DA. This generation is performed by processing of dividing a polygon SH in which the at least four adjustment points PT indicated by the adjustment point information DA are connected to one another into at least two triangles TR. Accordingly, the processing device 32 executes the processing. Information generated by the processing is stored in the storage device 31 as the division information DD. In step S40, the processing device 32 functioning as the processing unit 32d generates the coordinate data DP based on the division information DD. This generation is performed by extracting coordinates of the vertices PV of each of the at least two triangles TR indicated by the division information DD. The generated coordinate data DP is stored in the storage device 31.

After step S40, in step S50, the processing device 32 functioning as the communication controller 32b causes the communication device 33 to transmit the coordinate data DP. Accordingly, the processing device 32 transmits the coordinate data DP to the processing device 12. After receiving the coordinate data DP, the processing device 12 causes the storage device 11 to store the coordinate data DP.

Here, step S50 in the present embodiment includes step S51. In step S51, the processing device 32 functioning as the communication controller 32b causes the communication device 33 to transmit the first coordinate data DP1. Accordingly, the processing device 32 transmits the first coordinate data DP1 to the processing device 12. Here, the coordinate data DP is transmitted in first step S50 but only the first coordinate data DP1 is transmitted in second and subsequent steps S50.

After step S50, in step S60, the processing device 12 functioning as the mask generator 12c generates the mask data DM based on the coordinate data DP. Accordingly, the processing device 12 generates the mask data DM based on the coordinate data DP. However, in second and subsequent steps S50, the processing device 12 updates the mask data DM based on the first coordinate data DP1.

After step S60, in step S70, the processing device 12 functioning as the projection controller 12a controls operations of the image processing circuit 14 and the optical device 15 based on the mask data DM. Accordingly, the first projector 10-1 projects the masked image GM based on the mask data DM as the first image G1. With steps S60 and S70 explained above, it is possible to cause the first projector 10-1 to project the masked image GM having a display range or a display shape corresponding to an image displayed on the display device 34.

After step S70, in step S80, the processing device 32 determines whether to end the processing. This determination is performed based on, for example, operation by the user on the terminal device 30.

When not ending the processing (NO in step S80), the processing device 32 returns to step S20. Accordingly, steps S20 to S70 are repeatedly executed. On the other hand, when ending the processing (YES in step S80), the processing device 32 ends the processing.

### 1-4. Adjustment Points

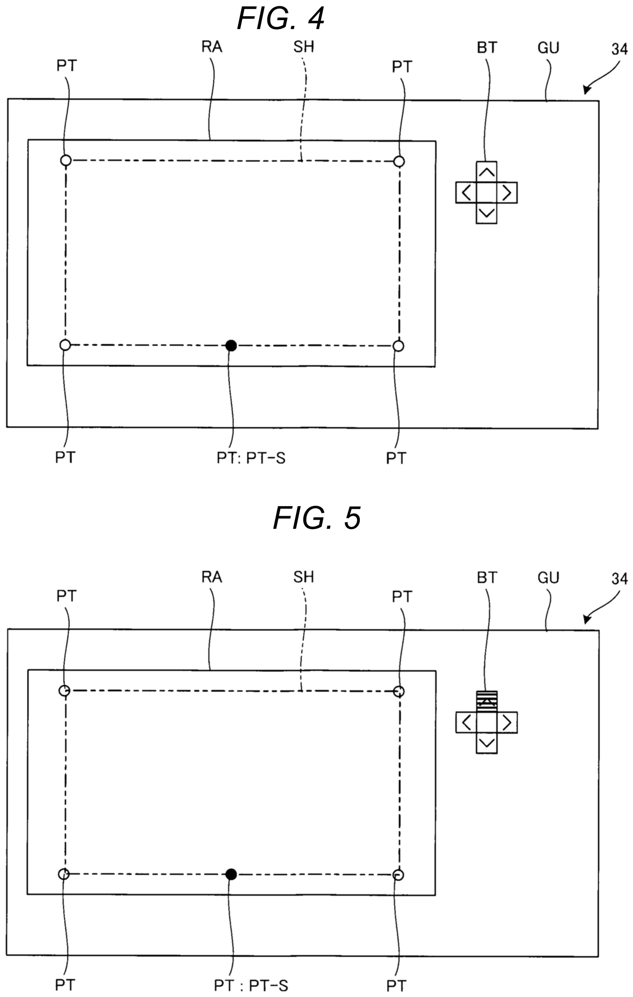

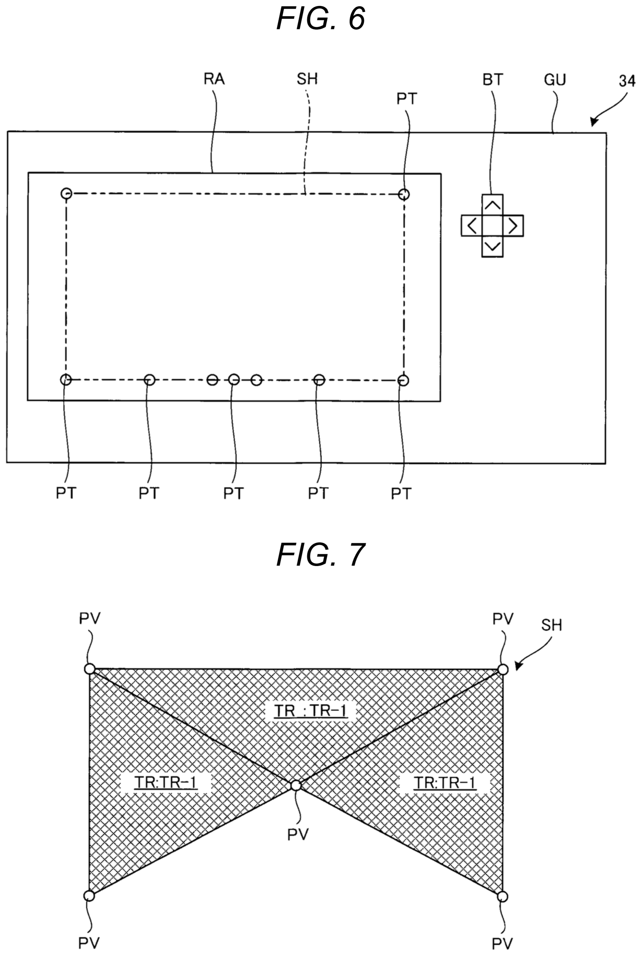

FIG. 4 is a diagram illustrating a display example of the adjustment points PT. FIG. 5 is a diagram illustrating operation on the adjustment points PT. FIG. 6 is a diagram illustrating addition of the adjustment points PT and operation on the adjustment points PT. In step S10, the processing device 32 functioning as the display controller 32a causes the display device 34 to display the image GU as illustrated in FIG. 4.

The image GU is a graphical user interface (GUI) image for receiving operation of adjusting a display range or a display shape of the first image G1 projected from the first projector 10-1 onto a target. In the example illustrated in FIG. 4, the image GU includes a region RA and an operation unit BT.

The region RA is a region for displaying at least four adjustment points PT for adjusting the display range or the display shape. The at least four adjustment points PT are points for adjusting the display range or the display shape of the first image G1 projected from the first projector 10-1 onto the target and are located on the outer edge of the polygon SH. Here, the adjustment points PT are always located at vertices of the polygon SH.

In the example illustrated in FIG. 4, the polygon SH is a quadrangle and the at least four adjustment points PT include one adjustment point PT located on one side of the polygon SH besides four adjustment points PT respectively located at four vertices of the polygon SH. When the default polygon SH is a quadrangle, for example, the four adjustment points PT respectively located at the four vertices of the polygon SH are displayed first.

Here, the region RA is capable of receiving operation of selecting the adjustment point PT to be moved. For example, by performing operation of clicking a not-illustrated mouse in a state in which a not-illustrated pointer is superimposed on the adjustment point PT, the adjustment point PT to be operated by the operation unit BT explained below is selected. In FIG. 4, the first adjustment point PT-S is illustrated as the selected adjustment point PT in a display form different from that of the other adjustment points PT. For example, a color of the first adjustment point PT-S is different from a color of the other adjustment points PT.

The region RA is capable of receiving operation of adding the adjustment point PT. For example, by performing operation of right-clicking the not-illustrated mouse in a state in which the not-illustrated pointer is superimposed on any position on the outer edge of the polygon SH, the adjustment point PT is added to an addition position closest to the position. In FIG. 4, the first adjustment point PT-S is illustrated as the added adjustment point PT. The first adjustment point PT-S may be added to any position itself.

The operation unit BT receives operation on the selected adjustment point PT. More specifically, the operation unit BT receives operation of moving the adjustment point PT of the masked image GM corresponding to the selected adjustment point PT. The operation is an example of operation on a first adjustment point among at least four adjustment points, the operation being for adjusting a display range or a display shape. In the example illustrated in FIG. 4, the operation unit BT includes four regions indicating up, down, left, and right. For example, by clicking the not-illustrated mouse in a state in which the not-illustrated pointer is superimposed on any one of the up, down, left, and right regions, the adjustment point PT of the masked image GM corresponding to the selected adjustment point PT moves in a direction corresponding to the region superimposed on the pointer. At this time, the adjustment point PT selected in the region RA does not always need to move and at least the adjustment point PT of the masked image GM only has to move. In the present embodiment, the adjustment points PT in the image GU do not visually move, that is, the polygon SH in the region RA does not visually deform but the processing device 32 grasps how much pixels indicating the adjustment points PT in the light modulation element have moved according to the operation on the operation unit BT. Therefore, the processing device 32 internally recognizes the polygon SH deformed according to the operation on the operation unit BT. Therefore, an expression such as "deformation of the polygon SH" in the following explanation indicates deformation of the polygon SH serving as internal data rather than visual deformation. Similarly, an expression such as "division of the polygon SH" in the following explanation indicates division of the polygon SH in calculation. Here, operation on the adjustment points PT may be performed while observing the adjustment points PT or the outer shape of the masked image GM projected onto the projection surface SC as explained below after the execution of step S70. A method of moving the selected adjustment point PT is not limited to the method using the operation unit BT and may be, for example, a method of moving the adjustment point PT by dragging the adjustment point PT using the not-illustrated mouse in a state in which the not-illustrated pointer is superimposed on the adjustment point PT to be moved.

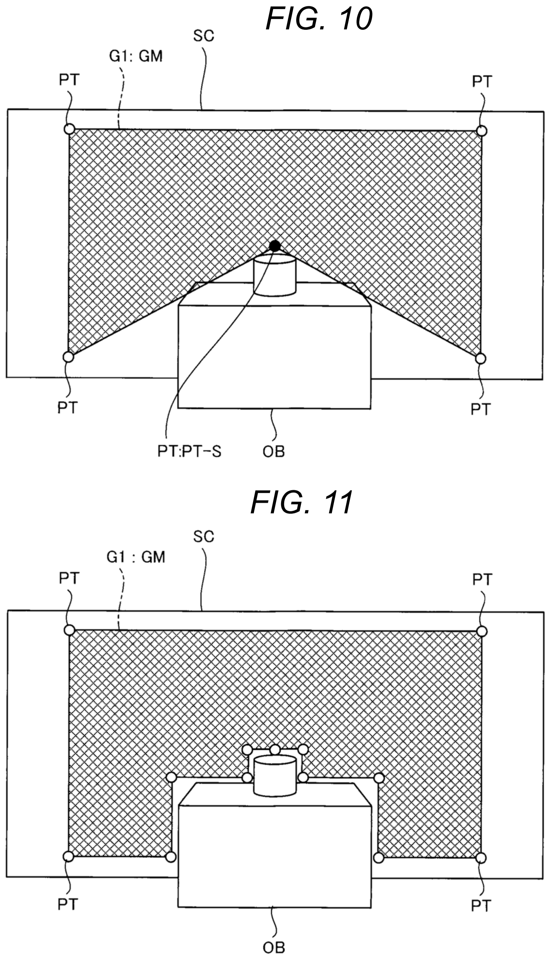

After one adjustment point PT located on one side of the polygon SH is selected and the first adjustment point PT-S is determined, by clicking, with the mouse, the region indicating up indicated by hatching in FIG. 5 among the four regions of the operation unit BT, the outer shape of the masked image GM, that is, a mask shape changes according to the operation on the first adjustment point PT-S as illustrated in FIG. 10 referred to below. In an example illustrated in FIG. 10, the outer shape of the masked image GM is deformed from a quadrangle to a pentagon. As explained above, in the present embodiment, the polygon SH in the region RA does not change and, on the other hand, the outer shape of the masked image GM changes according to the operation of the adjustment point PT by the operation unit BT.

By performing the addition of the adjustment point PT and the operation on the adjustment point PT in the region RA as appropriate, it is possible to further change the outer shape of the masked image GM as illustrated in FIG. 11 referred to below. In FIG. 11, an aspect in which the outer shape of the masked image GM is formed in a shape that avoids the obstacle OB explained above is exemplified. Note that a final shape of the polygon SH is not limited to the illustrated example and is optional. That is, a final number and final disposition of the adjustment points PT are not limited to the illustrated example and are optional.

### 1-5. Division of the polygon

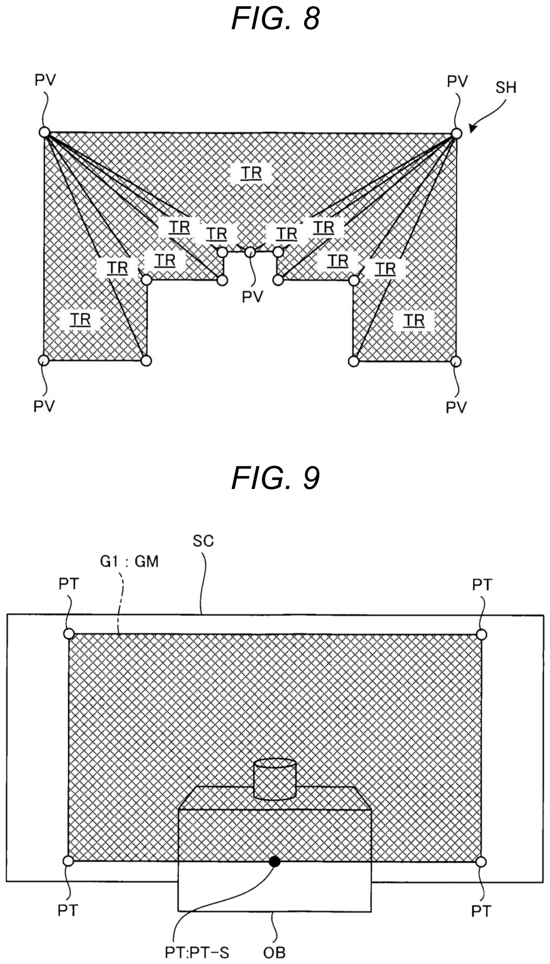

FIGS. 7 and 8 are diagrams illustrating division of the polygon SH. In step S40, for example, in the case of a pentagon obtained by deforming the quadrangular polygon SH illustrated in FIG. 5 explained above, processing of dividing the pentagon into three triangles TR is performed as illustrated in FIG. 7. In step S40, for example, in the case of a tridecagon obtained by deforming the polygon SH, as illustrated in FIG. 8, processing of dividing the tridecagon into eleven triangles TR is performed.

A method of the division processing explained above is not particularly limited. For example, a publicly-known technique such as a Delaunay triangulation algorithm is used. The forms of division illustrated in FIGS. 7 and 8 are exemplifications and are not limited thereto.

### 1-6. Masked image

FIG. 9 is a diagram illustrating projection of the masked image GM before adjustment. FIG. 10 is a diagram illustrating projection of the masked image GM during adjustment. FIG. 11 is a diagram illustrating projection of the masked image GM after adjustment.

In step S60, for example, when the polygon SH is the quadrangle as illustrated in FIG. 4 explained above, the quadrangular masked image GM is projected onto the projection surface SC as the first image G1 as illustrated in FIG. 9. In the step S60, for example, when the polygon SH is the pentagon deformed from the quadrangle by operation on the first adjustment point PT-S as illustrated in FIG. 5 referred to above, as illustrated in FIG. 10, the masked image GM having a shape corresponding to an operation amount or the number of times of operation on the adjustment point PT defining the polygon SH, that is, the pentagon is projected onto the projection surface SC as the first image G1. In the present embodiment, every time each of the four regions of the operation unit BT is clicked once by the mouse, the adjustment point PT of the masked image GM corresponding to the region RA is moved by one pixel in the direction indicated by each of the four regions of the operation unit BT. The operation amount or the number of times of operation is, for example, the number of clicks by the mouse. Here, an amount of the adjustment point PT of the masked image GM moving when each of the four regions of the operation unit BT is clicked once by the mouse may not be an amount for one pixel and may be an amount for two pixels or any number of pixels can be set. Further, in the step S60, for example, when the polygon SH is divided into a plurality of triangles as illustrated in FIG. 8, as illustrated in FIG. 11, the masked image GM having a tridecagonal shape is projected onto the projection surface SC as the first image G1. In this case, a pattern image and a content image are displayed, to avoid the obstacle OB, in a region formed by connecting thirteen adjustment points PT.

### 1-7. Update of the masked image

The coordinate data DP transmitted in first step S50 includes information indicating coordinates of the vertices PV of all the triangles TR obtained by dividing the polygon SH explained above. Accordingly, in step S60 executed first, the mask data DM is generated using the coordinate data DP and all the triangles TR are drawn on the light modulator 15b one by one based on the mask data DM, whereby the masked image GM having a shape corresponding to a deformed shape of the polygon SH is projected onto the projection surface SC.

However, in second and subsequent steps S60, the shape of the masked image GM is updated by updating the already created mask data DM based on the first coordinate data DP1. An example of this update is explained below. Hereinafter, a polygon SH-n (n is a natural number) does not indicate a visual shape in a region RA but indicates shape data serving as internal data obtained as a result of operation on the adjustment point PT by the operation unit BT. The vertex PV moving indicates that a pixel corresponding to the vertex PV or the adjustment point PT in the coordinate system of the light modulation element moves according to operation on the adjustment point PT by the operation unit BT. At this time, the processing device 32 recognizes deformation of a polygon or a triangle drawn on the light modulation element.

### 1-7-1. First example

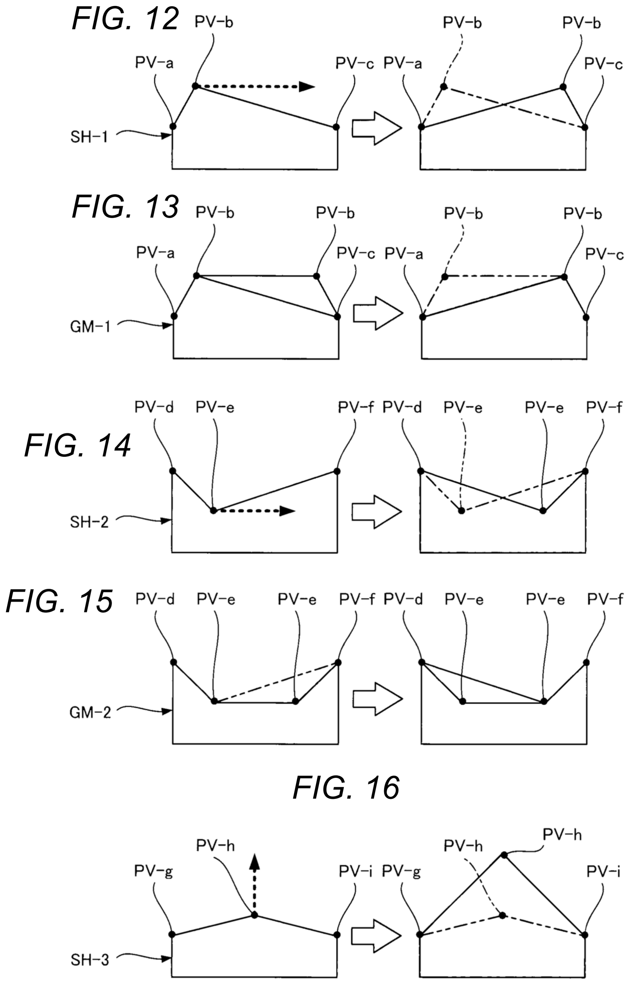

FIG. 12 is a diagram illustrating a first example of deformation of a polygon SH-1. FIG. 13 is a diagram illustrating update of a masked image GM-1 in the first example illustrated in FIG. 12. In FIG. 12, the polygon SH-1 before deformation is indicated by a solid line on the left side and the polygon SH-1 after deformation is indicated by a solid line on the right side. On the right side in FIG. 12, the polygon SH-1 before deformation is indicated by an alternate long and two short dashes line.

As illustrated on the left side in FIG. 12, the polygon SH-1 before deformation includes vertices PV-a, PV-b, and PV-c. The vertices PV-a, PV-b, and PV-c are vertices arranged in this order along the outer edge of the polygon SH-1. A convex corner is formed by a side connecting the vertex PV-a and the vertex PV-b and a side connecting the vertex PV-c and the vertex PV-b.

When the vertex PV-b is moved while the convex corner is being formed as illustrated on the right side in FIG. 12, the first coordinate data DP1 includes information indicating coordinates of the vertices PV-a, PV-b, and PV-c equivalent to the vertices PV of the first triangle TR-1 explained above. Here, the vertex PV-b is the vertex PV equivalent to the first adjustment point PT-S explained above. The first coordinate data DP1 includes information indicating a coordinate of the vertex PV-b before movement and information indicating a coordinate of the vertex PV-b after movement.

In step S60, first, as illustrated on the left side in FIG. 13, processing of adding a triangle having the vertex PV-b before movement, the vertex PV-b after movement, and the vertex PV-c to the shape of the masked image GM indicated by the already created mask data DM is performed and, thereafter, as illustrated on the right side in FIG. 13, processing of subtracting a triangle having the vertex PV-b before movement, the vertex PV-b after movement, and the vertex PV-a is performed. Accordingly, the masked image GM-1 is updated to a shape corresponding to the shape of the polygon SH-1 after deformation. That is, a region on the inside of the polygon SH-1 after deformation in the light modulation element is a region where a pattern image or a content image is actually drawn.

### 1-7-2. Second example

FIG. 14 is a diagram illustrating a second example of deformation of a polygon SH-2. FIG. 15 is a diagram illustrating update of a masked image GM-2 in the second example illustrated in FIG. 14. In FIG. 14, the polygon SH-2 before deformation is indicated by a solid line on the left side and the polygon SH-2 after deformation is indicated by a solid line on the right side. On the right side in FIG. 14, the polygon SH-2 before deformation is indicated by an alternate long and two short dashes line.

As illustrated on the left side in FIG. 14, the polygon SH-2 before deformation includes vertices PV-d, PV-e, and PV-f. The vertices PV-d, PV-e, and PV-f are vertices arranged in this order along the outer edge of the polygon SH-2. A concave corner is formed by a side connecting the vertex PV-d and the vertex PV-e and a side connecting the vertex PV-f and the vertex PV-e.

When the vertex PV-e is moved while the concave corner is being formed as illustrated on the right side in FIG. 14, the first coordinate data DP1 includes information indicating coordinates of the vertices PV-d, PV-e, and PV-f equivalent to the vertices PV of the first triangle TR-1 explained above. Here, the vertex PV-e is the vertex PV equivalent to the first adjustment point PT-S explained above. The first coordinate data DP1 includes information indicating a coordinate of the vertex PV-e before movement and information indicating a coordinate of the vertex PV-e after movement.

In step S60, first, as illustrated on the left side in FIG. 15, processing of subtracting a triangle having the vertex PV-e before movement, the vertex PV-e after movement, and the vertex PV-f from the shape of the masked image GM indicated by the already created mask data DM is performed and, thereafter, as illustrated on the right side in FIG. 15, processing of adding a triangle having the vertex PV-e before movement, the vertex PV-e after movement, and the vertex PV-d is performed. Accordingly, the masked image GM-2 is updated to a shape corresponding to the shape of the polygon SH-2 after deformation. That is, a region on the inside of the polygon SH-2 after deformation in the light modulation element is a region where a pattern image or a content image is actually drawn.

### 1-7-3. Third example

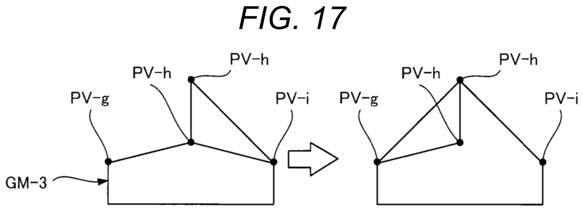

FIG. 16 is a diagram illustrating a third example of deformation of a polygon SH-3. FIG. 17 is a diagram illustrating update of a masked image GM-3 in the third example illustrated in FIG. 16. In FIG. 16, the polygon SH-3 before deformation is indicated by a solid line on the left side and the polygon SH-3 after deformation is indicated by a solid line on the right side. On the right side in FIG. 16, the polygon SH-3 before deformation is indicated by an alternate long and two short dashes line.

As illustrated on the left side in FIG. 16, the polygon SH-3 before deformation includes vertices PV-g, PV-h, and PV-i. The vertices PV-g, PV-h, and PV-i are vertices arranged in this order along the outer edge of the polygon SH-3. A convex corner is formed by a side connecting the vertex PV-g and the vertex PV-h and a side connecting the vertex PV-i and the vertex PV-h.

When the vertex PV-h is moved to reduce an angle of the convex corner as illustrated on the right side in FIG. 16, the first coordinate data DP1 includes information indicating coordinates of the vertices PV-g, PV-h, and PV-i equivalent to the vertices PV of the first triangle TR-1 explained above. Here, the vertex PV-h is the vertex PV equivalent to the first adjustment point PT-S explained above. The first coordinate data DP1 includes information indicating a coordinate of the vertex PV-h before movement and information indicating a coordinate of the vertex PV-h after movement.

In step S60, first, as illustrated on the left side in FIG. 17, processing of adding a triangle having the vertex PV-h before movement, the vertex PV-h after movement, and the vertex PV-i to the shape of the masked image GM indicated by the already created mask data DM is performed and, thereafter, as illustrated on the right side in FIG. 17, processing of adding a triangle having the vertex PV-h before movement, the vertex PV-h after movement, and the vertex PV-g is performed. Accordingly, the masked image GM-3 is updated to a shape corresponding to the shape of the polygon SH-3 after deformation. That is, a region on the inside of the polygon SH-3 after deformation in the light modulation element is a region where a pattern image or a content image is actually drawn. After processing of adding a triangle having the vertex PV-h before movement, the vertex PV-h after movement, and the vertex PV-g is performed as illustrated on the right side in FIG. 17, processing of adding a triangle having the vertex PV-h before movement, the vertex PV-h after movement, and the vertex PV-i may be performed as illustrated on the left side in FIG. 17.

In the data transmission method explained above, the processing device 32 does not transmit data such as vector data or raster data indicating the polygon SH as it is to the processing device 12 but divides the polygon SH into at least two triangles TR to thereby convert the data into simple data of the coordinate data DP of each of the at least two triangles TR and, thereafter, transmits the simple data to the processing device 12. Accordingly, it is possible to transmit the coordinate data DP as information indicating the polygon SH while suppressing a decrease in transmission speed.

In the present embodiment, as explained above, according to steps S60 and S70, it is possible to cause the first projector 10-1 to project the masked image GM having a display range or a display shape corresponding to an image of the polygon SH displayed on the display device 34.

As explained above, since the processing device 32 transmits the first coordinate data DP1 indicating coordinates of the vertices PV of the first triangle TR-1 having the operated first adjustment point PT-S as a vertex, it is possible to further suppress a decrease in transmission speed as compared with an aspect in which all the pieces of coordinate data DP are transmitted.

### 2. Modifications

The embodiment exemplified above can be variously modified. Specific aspects of modifications applicable to the embodiment explained above are exemplified below. Two or more aspects optionally selected from the following exemplifications can be combined as appropriate to the extent that no contradiction occurs.

### 2-1. Modification 1

In the embodiment explained above, the aspect in which the terminal device 30 is directly connected to the first projector 10-1 is exemplified. However, without being limited to this aspect, for example, the terminal device 30 may be connected to the first projector 10-1 via another computer. In this case, the other computer is equivalent to the "second information processing device" or the "one or the plurality of second processors".

### 2-2. Modification 2

In the embodiment explained above, the transmission of the coordinate data DP from the terminal device 30 to the first projector 10-1 and the processing involved in the transmission are representatively explained. However, similarly, transmission of the coordinate data DP from the terminal device 30 to the second projector 10-2 and processing involved in the transmission may be performed.

### 2-3. Modification 3

In the embodiment explained above, the aspect in which the plurality of projectors 10 are used is exemplified. However, without being limited to the aspect, for example, the second projector 10-2 may be omitted.

### 2-4. Modification 4

The programs PR1 and PR2 in the embodiment explained above may be provided in a state of being recorded on a computer-readable and non-transitory recording medium. The computer is, for example, the processing device 12 or the terminal device 30. The programs PR1 and PR2 in the embodiment explained above may be provided in a form of being downloaded from a server to the computer through a network.

### 3. Appendixes

The present disclosure will be summarized below in the form of appendices.

(Appendix 1) According to a first aspect of the present disclosure, there is provided a data transmission method including: displaying, with a display device different from a projection device and connected to a first information processing device, at least four adjustment points for adjusting a display range or a display shape of an image projected from the projection device onto a target; executing, with the first information processing device, processing of dividing a polygon in which the at least four adjustment points are connected to one another into at least two triangles; and transmitting, with the first information processing device, coordinate data indicating coordinates of vertices of each of the at least two triangles to a second information processing device different from the first information processing device and configured to control the projection device.

In the above aspect, the first information processing device does not transmit data indicating the polygon as it is to the second information processing device but divides the polygon into at least two triangles to thereby convert the data into simple data of coordinate data of each of the at least two triangles and, thereafter, transmits the simple data to the second information processing device. Accordingly, it is possible to transmit information indicating the polygon while suppressing a decrease in transmission speed.

(Appendix 2) In a second aspect which is a preferred example of the first aspect, the data transmission method further includes: generating, with the second information processing device, mask data for adjusting the display range based on the coordinate data; and projecting, with the projection device, a masked image based on the mask data. In the above aspect, it is possible to cause the projection device to project the masked image having a display range or a display shape corresponding to an image displayed on the display device.

(Appendix 3) In a third aspect that is a preferred example of the first aspect or the second aspect, the data transmission method further includes receiving, with the first information processing device, operation for a first adjustment point among the at least four adjustment points, the operation being for adjusting the display range or the display shape, and transmitting the coordinate data includes transmitting, with the first information processing device, to the second information processing device, first coordinate data indicating coordinates of vertices of a first triangle, of the at least two triangles, having the first adjustment point as a vertex. In the above aspect, since the first information processing device transmits the first coordinate data indicating the coordinates of the vertices of the first triangle having the operated first adjustment point as the vertex, it is possible to suppress a decrease in the transmission speed as compared with an aspect in which all the pieces of coordinate data are transmitted.

(Appendix 4) According to a fourth aspect of the present disclosure, there is provided a transmission system including: a projection device configured to project an image onto a target; a display device configured to display at least four adjustment points for adjusting a display range or a display shape of the image; and one or more of first processors configured to control the display device, wherein the one or the plurality of first processors execute; executing processing of dividing a polygon in which the at least four adjustment points are connected to one another into at least two triangles; and transmitting coordinate data indicating coordinates of vertices of each of the at least two triangles to one or more of second processors different from the one or more first processors and configured to control the projection device.

In the above aspect, the first processor does not transmit data indicating the polygon as it is to the second processor but divides the polygon into at least two triangles to thereby convert the data into simple data of coordinate data of each of the at least two triangles and, thereafter, transmits the simple data to the second processor. Accordingly, it is possible to transmit information indicating the polygon while suppressing a decrease in transmission speed.

(Appendix 5) According to a fifth aspect of the present disclosure, there is provided a program for causing a computer, which controls a display device that displays at least four adjustment points for adjusting a display range or a display shape of an image projected from a projection device to a target, to execute: dividing a polygon in which the at least four adjustment points are connected to one another into at least two triangles; and transmitting coordinate data indicating coordinates of vertices of each of the at least two triangles to another computer that controls the projection device.

In the above aspect, the computer does not transmit data indicating the polygon as it is to the other computer but divides the polygon into at least two triangles to thereby convert the data into simple data of coordinate data of each of the at least two triangles and, thereafter, transmits the simple data to the other computer. Accordingly, it is possible to transmit information indicating the polygon while suppressing a decrease in transmission speed.

## Claims

1. A data transmission method comprising:
displaying, with a display device different from a projection device and connected to a first information processing device, at least four adjustment points for adjusting a display range or a display shape of an image projected from the projection device onto a target;
executing, with the first information processing device, processing of dividing a polygon in which the at least four adjustment points are connected to one another into at least two triangles; and
transmitting, with the first information processing device, coordinate data indicating coordinates of vertices of each of the at least two triangles to a second information processing device different from the first information processing device and configured to control the projection device.

2. The data transmission method according to claim 1, further comprising:
generating, with the second information processing device, mask data for adjusting the display range based on the coordinate data; and
projecting, with the projection device, a masked image based on the mask data.

3. The data transmission method according to claim 1 or 2, further comprising receiving, with the first information processing device, operation for a first adjustment point among the at least four adjustment points, the operation being for adjusting the display range or the display shape, wherein
transmitting the coordinate data includes transmitting, with the first information processing device, to the second information processing device, first coordinate data indicating coordinates of vertices of a first triangle, of the at least two triangles, having the first adjustment point as a vertex.

4. A transmission system comprising:
a projection device configured to project an image onto a target;
a display device configured to display at least four adjustment points for adjusting a display range or a display shape of the image; and
one or more of first processors configured to control the display device, wherein
the one or the plurality of first processors execute;
executing processing of dividing a polygon in which the at least four adjustment points are connected to one another into at least two triangles; and
transmitting coordinate data indicating coordinates of vertices of each of the at least two triangles to one or more of second processors different from the one or more first processors and configured to control the projection device.

5. A program for causing a computer, which controls a display device that displays at least four adjustment points for adjusting a display range or a display shape of an image projected from a projection device to a target, to execute:
dividing a polygon in which the at least four adjustment points are connected to one another into at least two triangles; and
transmitting coordinate data indicating coordinates of vertices of each of the at least two triangles to another computer that controls the projection device.
